# DEMANDE DE BREVET EUROPEEN

(11) **EP 1 096 590 A1**
(43) Date de publication de la demande: **02.05.2001**
(21) Numéro de dépôt: 00402755.3
(22) Date de dépôt: 06.10.2000
(51) Int. Cl.: H01M 10/04, H01M 10/50, H01M 2/02, B60L 11/18, H01M 2/10

(54) **Batterie d'accumulateurs pour véhicule automobile**

(30) Priorité: 27.10.1999 FR 9913420
(71) Demandeur: Renault, 92100 Boulogne Billancourt (FR)
(72) Inventeur: Bogel, Wolfgang, 75014 Paris (FR); Hiron, Christian, 75014 Paris (FR); Brunet, Jean-Luc, 95100 Argenteuil (FR); Lehongre, Claude, 75014 Paris (FR)

(57) **Abrégé**

L'invention propose une batterie (10) d'accumulateurs pour véhicule automobile, notamment pour un véhicule automobile à motorisation électrique, du type qui comporte un boîtier à l'intérieur duquel sont agencés des éléments unitaires (12, 12a, 12b, 12c, 12d) d'accumulateur entre certains desquels circule au moins un flux d'air de refroidissement, caractérisée en ce que le boîtier est constitué d'un empilement longitudinal de supports (30) contenant les éléments unitaires (12, 12a, 12b, 12c, 12d) d'accumulateur, réunis par des moyens d'assemblage (76, 78), pour permettre la réalisation de batteries (10) d'accumulateurs modulaires, de tailles et capacités adaptées à des véhicules déterminés, à partir de supports (30) communs d'éléments unitaires.

## Description

L'invention concerne une batterie d'accumulateurs pour véhicule automobile, notamment un véhicule électrique à motorisation au moins en partie électrique.

L'invention concerne une batterie d'accumulateurs pour véhicule automobile, notamment pour un véhicule automobile à motorisation électrique, du type qui comporte un boîtier à l'intérieur duquel sont agencés des éléments unitaires d'accumulateur entre certains desquels circule au moins un flux d'air de refroidissement.

On connaît de nombreux exemples de batteries d'accumulateurs de ce type.

Le document US-A-5.639.571 décrit et représente une batterie d'accumulateurs qui comporte une enceinte qui reçoit intérieurement un empilement de clayettes qui comportent des logements pour des éléments unitaires d'accumulateur de forme sensiblement parallélépipédique. Des interstices sont prévus entre les éléments unitaires d'accumulateur pour permettre une circulation d'air destinée à assurer le refroidissement des éléments unitaires d'accumulateurs.

L'inconvénient majeur d'une telle batterie est principalement son absence totale de modularité.

En effet, en fonction du type de véhicule auquel la batterie d'accumulateurs est dévolue, c'est à dire en fonction de la puissance du moteur électrique du véhicule et de l'espace qui est disponible à bord pour y loger la batterie, celle-ci est susceptible de comporter un nombre plus ou moins grand d'éléments unitaires d'accumulateurs.

Une telle batterie est donc par conséquent spécifique à un type de véhicule déterminé, ce qui contraint le fabricant de batteries à disposer d'autant de types d'enceintes différents que de véhicules dans lesquels les batteries correspondantes sont destinées à être montées.

Pour remédier à cet inconvénient l'invention propose une conception modulaire d'une batterie d'accumulateurs.

Dans ce but, l'invention propose une batterie d'accumulateurs du type décrit précédemment, caractérisée en ce que le boîtier est constitué d'un empilement longitudinal de supports contenant les éléments unitaires d'accumulateur, réunis par des moyens d'assemblage, pour permettre la réalisation de batteries d'accumulateurs modulaires, de tailles et capacités adaptées à des véhicules déterminés, à partir de supports communs d'éléments unitaires.

Selon d'autres caractéristiques de l'invention :
- les supports d'éléments unitaires comportent chacun une partie de moyens de canalisation d'au moins un flux d'air,
- les éléments unitaires sont de forme allongée, notamment cylindrique, et ils comportent à leurs extrémités opposées chacun une borne positive et une borne négative,
- chaque support comporte un nombre déterminé d'éléments unitaires, et la borne positive de chaque élément intermédiaire est reliée à la borne négative de l'élément unitaire intermédiaire adjacent,
- la liaison entre la borne positive d'un élément intermédiaire et la borne négative de l'élément unitaire intermédiaire adjacent est obtenue par contact direct des bornes,
- la liaison entre la borne positive d'un élément intermédiaire et la borne négative de l'élément unitaire intermédiaire adjacent est obtenue au moyen d'une tresse métallique,
- tous les éléments unitaires contenus par un même support sont introduits dans une gaine thermorétractable qui est conformée suivant un U de direction générale transversale, puis qui est chauffée, puis qui est enserrée longitudinalement dans deux logements en U associés portés par des parois transversales intérieures de deux demi-supports empilés longitudinalement selon un plan de joint transversal médian des éléments unitaires, la réunion des deux demi-supports formant un support complet,
- des parois transversales extérieures de chaque support comportent les parties des moyens de canalisation d'air qui sont destinées à coopérer avec les parties des moyens de canalisation portées par les parois transversales extérieures des supports adjacents,
- les parois transversales des demi-supports sont percées de manière que les logements communiquent, de part et d'autre des éléments unitaires, avec les parties des moyens de canalisation d'air pour assurer le refroidissement desdits éléments unitaires,
- chaque demi-support comporte au moins un élément de conduit longitudinal d'air qui est agencé transversalement avec jeu entre les branches du U du logement, dont au moins une paroi transversale comporte un orifice de communication avec l'élément de conduit longitudinal d'air du demi-support adjacent, dont les parois latérales tournées vers les branches du U comportent un demi-orifice latéral d'évacuation d'air qui est destiné à former avec le demi-orifice latéral d'évacuation d'air du support adjacent un orifice latéral complet, dont une paroi supérieure comporte un demi-orifice d'alimentation d'air, qui communique avec un élément longitudinal supérieur de boîtier de ventilateur et qui est destiné à former avec le demi-orifice d'alimentation d'air du support adjacent un orifice d'alimentation d'air complet, et dont une paroi inférieure comporte un demi-perçage qui débouche dans le demi-logement du demi-support entre deux éléments unitaires et qui est destiné à former avec le demi-perçage du demi-support complémentaire un perçage complet qui débouche entre lesdits deux éléments unitaires,
- les moyens d'assemblage comportent au moins deux perçages longitudinaux de chaque demi-support qui sont alignés avec les perçages longitudinaux des demi-supports adjacents de façon à permettre la mise en position de chaque demi-support par rapport au demi-support adjacent, et deux éléments, qui sont liés à une caisse du véhicule, et qui pincent longitudinalement l'empilement des supports.

D'autres caractéristiques et avantages de l'invention apparaîtront à la lecture de la description détaillée qui suit pour la compréhension de laquelle on se reportera aux dessins annexés dans lesquels :
- la figure 1 est une vue de côté d'un assemblage d'éléments unitaires alignés et reliés entre eux électriquement ;
- la figure 2 est une vue de côté de l'assemblage de la figure 1 introduit et mis en forme dans sa gaine thermorétractable ;
- la figure 3 est une vue de côté de l'assemblage de la figure 2 dans sa gaine thermorétractable après chauffage de ladite gaine thermorétractable ;
- la figure 4 est une vue en perspective d'un demi-support selon l'invention et d'un assemblage selon la figure 3 destiné à être reçu dans ce demi-support représenté en vue fantôme ;
- les figures 5 à 8 sont des vues, en coupe par les plans 5-5, 6-6, 7-7, et 8-8 de la figure 4, d'un demi support selon la figure 4 ;
- la figure 9 est une vue en coupe par le plan 9-9 de la figure 4 illustrant le montage d'un assemblage du type de celui représenté à la figure 3 dans deux demi-supports du type de celui représenté à la figure 4 ;
- la figure 10 est une vue en coupe par un plan confondu avec le plan 7-7 de la figure 4 de la batterie d'accumulateurs assemblée ;
- la figure 11 est une vue de détail de côté de la connexion d'un élément unitaire d'accumulateur d'extrémité ;
- la figure 12 est une vue de détail de dessus de la connexion entre deux éléments unitaires d'accumulateur d'extrémité de deux supports adjacents ;
- la figure 13 est une vue de détail de dessus de la connexion d'un élément unitaire d'accumulateur d'extrémité d'un support d'extrémité longitudinale de la batterie d'accumulateurs.

Dans la description qui va suivre, des chiffres de référence identiques désignent des pièces identiques ou ayant des fonctions similaires.

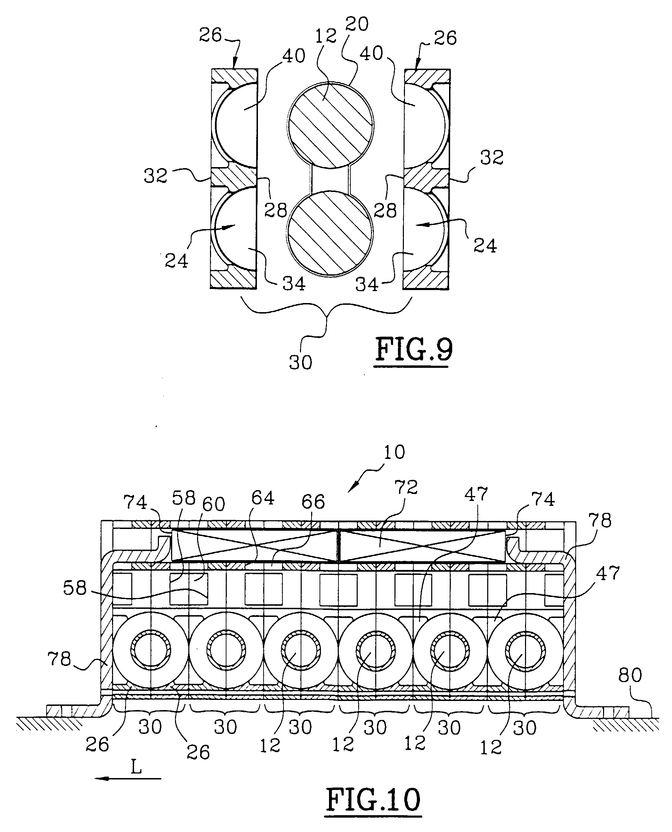

On a représenté à la figure 10 une batterie d'accumulateurs pour un véhicule automobile à motorisation électrique qui comporte des éléments unitaires d'accumulateurs et qui, conformément à l'invention, est constituée d'un empilement longitudinal, suivant une direction longitudinale L, de supports 30 qui contiennent les éléments unitaires, et sont réunis par des moyens d'assemblage.

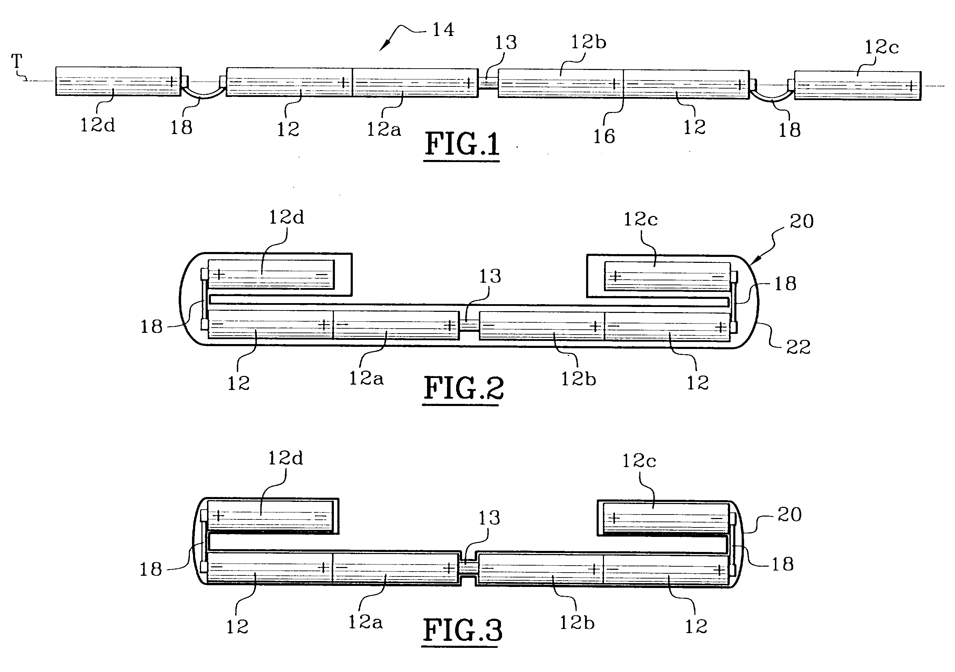

En particulier, on a représenté à la figure 1 un assemblage 14 d'éléments unitaires 12 d'accumulateur destinés à la fabrication d'une batterie d'accumulateurs réalisée conformément à l'invention.

Dans le mode de réalisation préféré de l'invention, et de manière non limitative de celle-ci, les éléments unitaires 12 d'accumulateur sont de forme allongée, notamment cylindrique, et comportent chacun une borne positive "+" et une borne négative "-".

Dans une première étape de la fabrication de la batterie d'accumulateurs, des éléments unitaires 12 d'accumulateurs en nombre déterminé, en fonction de la puissance électrique à fournir au moteur électrique du véhicule, sont alignés sensiblement suivant un axe transversal T, la borne négative "-" de chaque élément unitaire 12 intermédiaire étant reliée électriquement à la borne positive "+" de l'élément unitaire 12 intermédiaire adjacent. Les éléments unitaires 12 sont ainsi reliés électriquement suivant un branchement en série.

Comme représenté à la figure 1, la liaison électrique entre un élément unitaire 12 intermédiaire et l'élément unitaire 12 intermédiaires adjacent peut être réalisée de différentes façons.

En effet, dans le mode de réalisation préféré de l'invention, la liaison électrique entre des éléments unitaires 12 intermédiaires est obtenue par contact direct des bornes "+" et "-" des deux éléments unitaires 12 adjacents. La liaison électrique est du type des liaisons électriques 16 représentée à la figure 1.

Deux éléments unitaires 12a et 12b centraux comportent une liaison électrique qui est réalisée par intermédiaire d'une entretoise conductrice 13 qui est interposée entre la borne positive "+" de l'élément unitaire 12a et la borne négative "-" de l'élément unitaire 12b.

Avantageusement, cette entretoise 13 peut être venue de matière avec l'une ou l'autre de la borne positive "+" de l'élément unitaire 12a et de la borne négative "-" de l'élément unitaire 12b. Comme on le verra ultérieurement, cette entretoise 13 permet assurer une mise en position de l'ensemble des éléments unitaires 12.

L'alignement des éléments unitaires 12 comporte à ses extrémités opposées des éléments unitaires 12c et 12d qui sont reliés aux éléments 12 adjacents intermédiaires par l'intermédiaire d'une tresse métallique 18 et dont les bornes libres sont respectivement une borne positive "+" et une borne négative"-".

Au cours d'une deuxième étape (non représentée) de fabrication de la batterie d'accumulateurs, les éléments unitaires 12, qui sont alignés et reliés entre eux électriquement, sont introduits dans une gaine thermorétractable 20 qui, dans une troisième étape représentée à la figure 2, est repliée sur elle-même à 180° au niveau de ses extrémités 22 de façon que l'ensemble des éléments unitaires 12 qui sont reçus dans la gaine 20 présentent sensiblement la forme d'un U.

Plus particulièrement, les extrémités 22 de la gaine sont repliées à 180° entre les éléments unitaires 12c, 12d d'extrémité et les éléments unitaires 12 adjacents de façon que les éléments unitaires 12c, 12d soient parallèles aux éléments unitaires 12 adjacents.

Il sera compris que le repli des extrémités 22 de la gaine 20 est facilité par l'interposition, entre les éléments unitaires 12c, 12d d'extrémité et les éléments unitaires 12 adjacents, des tresses 18 précédemment décrites. Les tresses 18 permettent, de par leur souplesse, le repli des extrémités 22 de la gaine 20.

Dans une quatrième étape qui représentée à la figure 3, la gaine thermorétractable 20 est chauffée de façon à épouser la forme de l'ensemble des éléments unitaires 12, 12a, 12b, 12c, et 12d.

Dans une cinquième étape d'assemblage, comme l'illustre la figure 9, la gaine thermorétractable 20 contenant les éléments unitaires 12 est reçue dans deux demi-logements 24 complémentaires en forme de U portés par deux demi-supports 26, dont la réunion est destinée à former un support 30.

Ainsi, comme l'illustre la figure 10, la batterie d'accumulateurs 10 est constituée d'un empilement de demi-support 26 qui reçoivent les gaines 20 contenant les éléments unitaires 12. Les demi-supports 26 sont montés tête-bêche par paires pour constituer un empilement de supports 30 suivant la direction longitudinale L.

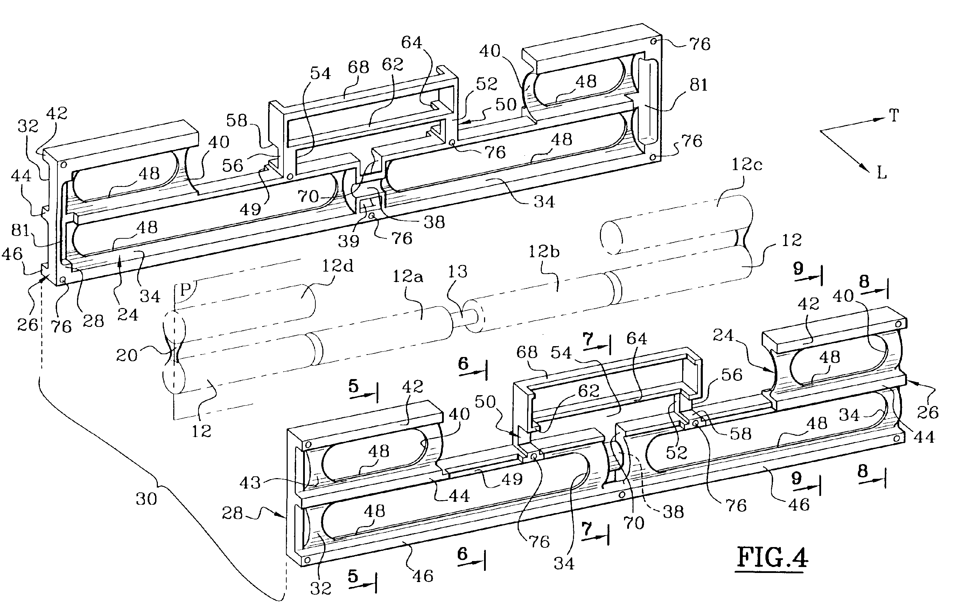

Comme l'illustre la figure 4, la gaine 20 contenant les éléments unitaires 12 est introduite suivant la direction longitudinale L dans un demi-logement 24 porté par une paroi intérieure 28 d'un demi-support 26.

Comme l'illustrent les figures 4 à 8, le demi-support 26 est de forme sensiblement parallélépipédique et est réalisé par moulage d'un matériau plastique. Il comporte la paroi intérieure 28 qui comporte le demi-logement 24 présentant la forme d'un U complémentaire des formes de la gaine 20 repliée, et une paroi extérieure 32 opposée qui sera décrite plus en détail ultérieurement.

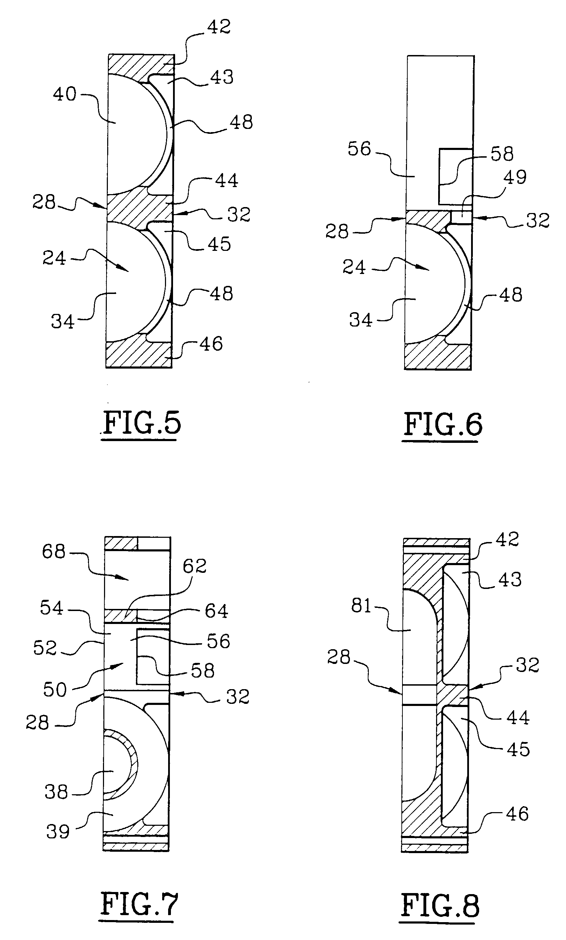

Comme l'illustrent les figures 4 à 6, le demi-logement 24 comporte deux cavités semi-cylindriques inférieures 34 qui s'étendent transversalement suivant la direction T et qui sont d'un diamètre correspondant à celui d'un élément 12. Entre ces cavités semi-cylindriques inférieures 34 est interposée une cavité semi-cylindrique centrale inférieure 38, qui est représentée aux figures 4 et 7, et qui est d'un diamètre correspondant à celui de l'entretoise 13.

La cavité semi-cylindrique 38 immobilise ainsi transversalement l'entretoise 13 et par conséquent la gaine 20 et l'ensemble des éléments 12, 12a, 12b, 12c, et 12d qu'elle contient.

Avantageusement, une ouverture 39, représentée à la figure 4, est agencée au droit de la cavité semi-cylindrique centrale inférieure 38dans l'épaisseur du demi-support 26 de façon que l'empilement des demi-supports 26 forme une succession d'ouvertures 39 permettant la circulation de l'air.

Le demi-logement 24 comporte aussi deux cavités semi-cylindriques supérieures 40, représentées aux figures 4 et 5, qui s'étendent transversalement suivant la direction T et qui sont d'un diamètre correspondant à celui des éléments 12c et 12d de l'extrémité 22 de la gaine 20, qu'elles sont destinées à recevoir.

De la sorte, comme l'illustre les figures 4 et 9, lors de la cinquième étape d'assemblage, la gaine 20 contenant les éléments unitaires 12 est enserrée longitudinalement dans les deux demi-logements 24 en U associés des deux demi-supports 26 empilés longitudinalement selon un plan de joint transversal médian (P) des éléments unitaires, la réunion des deux demi-supports 26 formant un support 30 complet.

Conformément à l'invention, les parois transversales extérieures 32 de chaque demi-support 26, qui sont aussi par conséquent les parois extérieures 32 longitudinalement opposées de chaque support 30, comportent les parties des moyens de canalisation d'air qui sont destinées à coopérer avec les parties des moyens de canalisation portées par les parois transversales extérieures des supports 30 adjacents.

Comme l'illustrent les figures 4, 5 et 8, chaque demi-support 26 comporte des nervures transversales 42 supérieures, des nervures 44 intermédiaires, et une nervure 46 inférieure qui s'étendent vers l'extérieur de la paroi extérieure 32 du demi-support 26.

Les nervures 42 supérieures et les nervures 44 intermédiaires sont agencées verticalement de part et d'autre des cavités supérieures 40, de sortent qu'elles délimitent deux demi-conduits transversaux 43 supérieurs de circulation d'air, qui sont représentés aux figures 5 et 8.

Lors de l'assemblage d'un support 30 avec le support 30 adjacent, les deux demi-conduits transversaux 43 forment deux conduits transversaux supérieurs (non représentés) de circulation d'air.

Les nervures 44 intermédiaires et les nervures 46 inférieures sont agencées verticalement de part et d'autre des cavités inférieures 34, de sortent qu'elles délimitent un demi-conduit transversal 45 inférieur de circulation d'air, qui est représenté aux figures 5 et 8.

Lors de l'assemblage d'un support 30 avec le support 30 adjacent, les deux demi-conduits transversaux 45 inférieur forment un conduit transversal inférieur 47 de circulation d'air qui est représenté à la figure 10.

Par ailleurs, les cavités semi-cylindriques supérieure 34 et inférieure 40 de chaque demi-support 26 sont percées de lumières 48, représentées aux figures 4, 5 et 6, qui traversent l'épaisseur commune de la paroi intérieure 28 et de la paroi extérieure 32 du demi-support 26. Ces lumières débouchent donc dans les conduits transversaux supérieurs et inférieur de circulation d'air décrits précédemment.

Avantageusement, comme l'illustre la figure 4, les lumières 48 sont de forme oblongue et s'étendent transversalement suivant la direction T sur la majeure partie de la longueur des cavités cylindriques 34 et 40 de façon à permettre un refroidissement optimal de la gaine 20 et des éléments 12, 12a, 12b, 12c, et 12d qu'elle contient.

De plus, comme l'illustrent les figures 4 et 7, chaque demi-support 26 comporte au moins un élément 50 de conduit longitudinal d'air qui est agencé transversalement avec jeu entre les branches du U du logement 24. L'empilement longitudinal des demi-supports 26 permet ainsi d'obtenir un conduit longitudinal (non représenté) qui traverse longitudinalement toute la batterie d'accumulateurs 10.

Au moins une paroi transversale 52 de l'élément 50 de conduit longitudinal d'air comporte un orifice 54 de communication avec l'élément de conduit longitudinal d'air du demi-support 26 adjacent. Par exemple, comme illustré à la figure 4, l'élément 50 de conduit longitudinal d'air comporte une paroi transversale 52 qui est percée dans toute sa dimension transversale d'un orifice 54 de communication avec l'élément de conduit longitudinal d'air du demi-support 26 du support 30 adjacent. Les orifices 54 déterminent les sections du conduit longitudinal d'air de l'ensemble de la batterie d'accumulateurs 10.

Comme l'illustrent les figures 4, 6 et 7, les parois latérales opposées 56 de chaque élément 50 de conduit longitudinal d'air qui sont tournées vers les branches du U comportent chacune un demi-orifice 58 latéral d'évacuation d'air qui est destiné à former avec le demi-orifice 58 latéral d'évacuation d'air du support 30 adjacent un orifice 60 latéral complet.

De la sorte, comme l'illustre la figure 10, le conduit longitudinal d'air de la batterie 10 est percé à intervalles réguliers d'orifices latéraux 60 d'évacuation d'air qui sont agencés longitudinalement en quinconce par rapport à chaque gaine 20.

Comme l'illustre la figure 7, une paroi supérieure 62 de chaque élément 50 de conduit longitudinal d'air comporte un demi-orifice 64 d'alimentation d'air, qui communique avec un élément longitudinal supérieur 68 de boîtier de ventilateur et qui est destiné à former avec le demi-orifice 64 d'alimentation d'air du support adjacent un orifice 66 d'alimentation d'air complet qui est représenté à la figure 10.

De la sorte, le conduit longitudinal d'air de la batterie 10 est percé à intervalles réguliers d'orifices supérieurs 66 d'admission d'air qui sont agencés longitudinalement en quinconce par rapport à chaque gaine 20. Les orifices 66 permettent l'alimentation du conduit longitudinal en air frais fourni par des ventilateurs (non représentés) logés dans le boîtier 72 de ventilateur formé de la succession des éléments longitudinaux supérieurs 68 de boîtier de ventilateur.

Comme l'illustre la figure 4, une paroi inférieure de chaque élément 50 de conduit longitudinal d'air, c'est à dire notamment la nervure intermédiaire 44, comporte un demi-perçage 70 qui débouche dans le demi-conduit transversal 45, et donc dans le conduit transversal 47, au niveau de l'entretoise 13 entre deux éléments unitaires 12, et qui est destiné à former avec le demi-perçage 70 du demi-support 26 complémentaire un perçage complet qui débouche entre lesdits deux éléments unitaires dans le conduit transversal 47.

D'une façon analogue, comme l'illustrent les figures 4 et 7, la nervure intermédiaire 44 comporte, transversalement entre les branches du U et l'élément de conduit longitudinal 50, un demi-orifice 49 qui permet la communication du demi-conduit 45 avec l'air en provenance du milieu extérieur.

Ainsi l'air est aspiré aux extrémités longitudinales 74 du boîtier 72 de ventilateur de la batterie 10 et il est acheminé d'une part dans les conduits transversaux inférieurs 47 délimités par chaque paire de supports 30 et, d'autre part, en section transversale, entre les branches des U des supports 30 par les orifices 60 d'évacuation d'air. Les conduits transversaux supérieurs 43 débouchent à leurs deux extrémités à l'air libre et assurent ainsi un refroidissement de tous les éléments unitaires 12c et 12d.

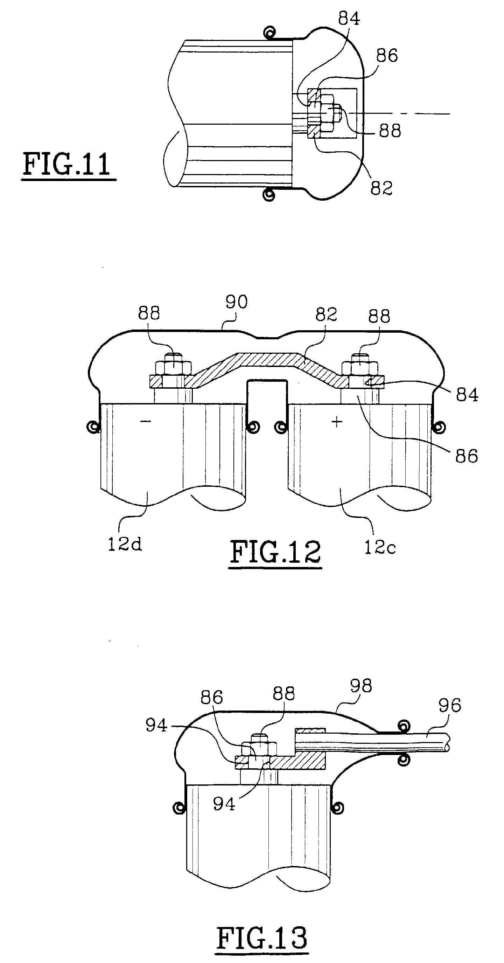

Comme l'illustrent les figures 11 à 13, la batterie d'accumulateurs 10 comporte des moyens de connexion électrique de ses éléments unitaires 12c et 12d.

Avantageusement, les moyens de connexions sont agencés dans des logements de connexion formés de la réunion de demi-logements 81 de connexion qui sont agencés aux extrémités transversales opposées des demi-supports 26.

Comme l'illustrent les figures 11 et 12, la connexion entre deux éléments unitaires 12c et 12d, qui appartiennent à des supports 30 intermédiaires, et qui sont situés d'un même côté par rapport à la direction longitudinale médiane est agencée, entre les branches des U et le boîtier 72 de ventilateur, par une plaque conductrice 82 percée de trous 84 qui sont destinés à permettre le passage de goujons 86 qui constituent les bornes des éléments unitaires d'extrémité 12c et 12d des deux supports 30 intermédiaires considérés. Des écrous 88 sont vissés sur les goujons 86 pour immobiliser la plaque 86.

Les gaines 20 sont montées de façon que les éléments 12 unitaires soient montés avec des polarités opposées d'un support 30 sur l'autre, de sorte que la borne positive "+" de l'élément 12c d'un support 30 est connectée par exemple à la borne négative "-" de l'élément 12d du support 30 adjacent.

L'ensemble des supports 30 forme une batterie d'éléments unitaires 12 qui sont reliés entre eux par un branchement en série.

Un cabochon 90 de matériau plastique souple est monté à cheval sur les deux supports 30 consécutifs de façon à protéger la connexion précédemment décrite. Avantageusement le cabochon 90 comporte un étranglement 92 qui est destiné à permettre le passage de l'air en regard des orifices 60 latéraux d'évacuation d'air.

Dans cette configuration, il subsiste à chacune des extrémités de la batterie 10 un seul élément 12 comportant une borne libre, à savoir un élément 12c d'une extrémité de la batterie 10 qui comporte une borne positive "+" et un élément 12d de l'extrémité opposée de la batterie 10 qui comporte une borne négative "-".

Comme l'illustre la figure 13, chacune de ces bornes comporte aussi un goujon 86 qui est reçu à travers un trou 94 d'une patte 96 de connexion, et qui reçoit un écrou 88 de fixation de la patte 96.

D'une façon analogue aux connexions intermédiaires, un cabochon 98 en matériau plastique souple, qui est traversé par la patte 96 de connexion, est reçu par l'extrémité du support 30 de façon à isoler cette connexion d'extrémité.

Conformément à l'invention, les moyens d'assemblage de la batterie 10 comportent au moins deux perçages 76 longitudinaux de chaque demi-support 26 qui sont alignés avec les perçages longitudinaux des demi-supports 26 adjacents de façon à permettre la mise en position de chaque demi-support 26 par rapport au demi-support 26 adjacent, notamment par l'intermédiaire de tirants (non représentés) qui traversent ces perçages 76 alignés. Dans le mode de réalisation préféré de l'invention, les moyens d'assemblage comportent six perçages 76, un à chaque l'extrémité transversale de chaque nervure 42 supérieure et inférieure 46, et un situé à proximité de l'axe longitudinal médian de la batterie 10, qui traverse chaque nervure intermédiaire 44.

Les moyens d'assemblage de la batterie 10 comportent aussi deux éléments 78 en forme d'équerres, qui sont liés à une caisse 80 du véhicule, et qui pincent longitudinalement l'empilement des supports 30.

La batterie d'accumulateurs 10 selon l'invention est par conséquent une batterie modulaire dont l'encombrement et la puissance peut être aisément adaptée à différents types de véhicules électriques.

## Revendications

1. Batterie (10) d'accumulateurs pour véhicule automobile, notamment pour un véhicule automobile à motorisation électrique, du type qui comporte un boîtier à l'intérieur duquel sont agencés des éléments unitaires (12, 12a, 12b, 12c, 12d) d'accumulateur entre certains desquels circule au moins un flux d'air de refroidissement,
caractérisée en ce que le boîtier est constitué d'un empilement longitudinal de supports (30) contenant les éléments unitaires (12, 12a, 12b, 12c, 12d) d'accumulateur, réunis par des moyens d'assemblage (76, 78), pour permettre la réalisation de batteries (10) d'accumulateurs modulaires, de tailles et capacités adaptées à des véhicules déterminés, à partir de supports (30) communs d'éléments unitaires.

2. Batterie (10) d'accumulateurs selon la revendication précédente, caractérisée en ce que les supports (30) d'éléments unitaires comportent chacun une partie de moyens de canalisation d'au moins un flux d'air.

3. Batterie (10) d'accumulateurs selon l'une des revendications précédentes, caractérisée en ce que les éléments unitaires (12, 12a, 12b, 12c, 12d) sont de forme allongée, notamment cylindrique, et en ce qu'ils comportent à leurs extrémités opposées chacun une borne positive (+) et une borne négative (-).

4. Batterie (10) d'accumulateurs selon la revendication précédente, caractérisée en ce que chaque support (30) comporte un nombre déterminé d'éléments unitaires (12, 12a, 12b, 12c, 12d), et en ce que la borne positive (+) de chaque élément intermédiaire (12, 12a, 12b) est reliée à la borne négative (-) de l'élément unitaire intermédiaire (12, 12a, 12b) adjacent.

5. Batterie (10) d'accumulateurs selon la revendication précédente, caractérisée en ce que la liaison entre la borne positive (+) d'un élément intermédiaire (12, 12a, 12b) et la borne négative (-) de l'élément unitaire intermédiaire (12, 12a, 12b) adjacent est obtenue par contact direct des bornes.

6. Batterie (10) d'accumulateurs selon la revendication 4, caractérisée en ce que la liaison entre la borne positive (+) d'un élément intermédiaire (12, 12a, 12b) et la borne négative (-) de l'élément unitaire intermédiaire (12, 12a, 12b) adjacent est obtenue au moyen d'une tresse (18) métallique.

7. Batterie (10) d'accumulateurs selon l'une quelconque des revendications 4 à 6, caractérisée en ce que tous les éléments unitaires (12, 12a, 12b, 12c, 12d) contenus par un même support (30) sont introduits dans une gaine (20) thermorétractable qui est conformée suivant un U de direction (T) générale transversale, puis qui est chauffée, puis qui est enserrée longitudinalement dans deux logements (24) en U associés portés par des parois transversales intérieures (28) de deux demi-supports (26) empilés longitudinalement selon un plan (P) de joint transversal médian des éléments unitaires (12, 12a, 12b, 12c, 12d), la réunion des deux demi-supports (26) formant un support (30) complet.

8. Batterie (10) d'accumulateurs selon la revendication précédente, caractérisée en ce que des parois (32) transversales extérieures de chaque support (30) comportent les parties des moyens de canalisation d'air qui sont destinées à coopérer avec les parties des moyens de canalisation portées par les parois (32) transversales extérieures des supports (30) adjacents.

9. Batterie (10) d'accumulateurs selon la revendication précédente, caractérisée en ce que les parois (32) transversales des demi-supports (26) sont percées de manière que les logements (24) communiquent, de part et d'autre des éléments unitaires (12, 12a, 12b, 12c, 12d), avec les parties des moyens de canalisation d'air pour assurer le refroidissement desdits éléments unitaires (12, 12a, 12b, 12c, 12d).

10. Batterie (10) d'accumulateurs selon la revendication précédente, caractérisée en ce que chaque demi-support (26) comporte au moins un élément (50) de conduit longitudinal d'air qui est agencé transversalement avec jeu entre les branches du U du logement (24), dont au moins une paroi (52) transversale comporte un orifice (54) de communication avec l'élément (50) de conduit longitudinal d'air du demi-support (26) adjacent, dont les parois latérales (56) tournées vers les branches du U comportent un demi-orifice (58) latéral d'évacuation d'air qui est destiné à former avec le demi-orifice (58) latéral d'évacuation d'air du support adjacent un orifice (60) latéral complet, dont une paroi supérieure (62) comporte un demi-orifice (64) d'alimentation d'air, qui communique avec un élément (68) longitudinal supérieur de boîtier (72) de ventilateur et qui est destiné à former avec le demi-orifice (64) d'alimentation d'air du support adjacent un orifice (66) d'alimentation d'air complet, et dont une paroi inférieure (44) comporte un demi-perçage (70) qui débouche dans le demi-logement (24) du demi-support (26) entre deux éléments unitaires (12a, 12b) et qui est destiné à former avec le demi-perçage (70) du demi-support (26) complémentaire un perçage complet qui débouche entre lesdits deux éléments unitaires.

11. Batterie (10) d'accumulateurs selon l'une quelconque des revendications 7 à 10, caractérisée en ce que les moyens d'assemblage comportent au moins deux perçages (76) longitudinaux de chaque demi-support (26) qui sont alignés avec les perçages longitudinaux des demi-supports (26) adjacents de façon à permettre la mise en position de chaque demi-support (26) par rapport au demi-support (26) adjacent, et deux éléments (78), qui sont liés à une caisse (80) du véhicule, et qui pincent longitudinalement l'empilement des supports (30).
